# EUROPEAN PATENT SPECIFICATION

(11) **EP 2 477 399 B1**
(45) Date of publication and mention of the grant of the patent: **03.08.2016**
(21) Application number: 12164182.3
(22) Date of filing: 05.11.2007
(51) Int. Cl.: H04N 7/24, G06F 17/30

(54) **Providing information while rendering content**
Informationsbereitstellung während des Rendering von Inhalt
Fourniture d'informations pendant le rendu de contenu

(30) Priority: 06.11.2006 US 593354
(43) Date of publication of application: 18.07.2012
(62) Divisional of application: 07846530.9
(73) Proprietor: Nokia Technologies Oy, 02610 Espoo (FI)
(72) Inventor: Kraft, Christian, DK-1814 Frederiksberg (DK); Nielsen, Peter, DK-2800 Kgs. Lyngby (DK)
(74) Representative: Swindell & Pearson Limited

(56) References cited:
- WO-A-97/27546
- WO-A-98/17064
- WO-A-02/058399
- US-A- 5 774 664
- LEPLEY K: "WEBTV NETWORKS INTRODUCES REVOLUTIONARY NEXT-GENERATION SYSTEM", INTERNET CITATION , 16 September 1997 (1997-09-16), XP002101851, Retrieved from the Internet: URL:http://webtv.net/company/media_center/ webtvplus.html [retrieved on 1999-04-29]

## Description

### FIELD OF THE INVENTION

Embodiments of the present invention relate to providing information while rendering content. In particular, they relate to an apparatus, a method, a graphical user interface and a computer program for providing information while rendering content.

### BACKGROUND TO THE INVENTION

Applications that render content, such as for example, music players, video players etc may stand alone within an apparatus and not be integrated with other aspects of the apparatus.

### BRIEF DESCRIPTION OF THE INVENTION

According to one embodiment of the invention there is provided a method comprising: rendering content while displaying at least a first screen; detecting that the rendered content is linked to data; and interrupting the first screen to display an additional screen that is dependent upon the linked data.

According to another embodiment of the invention there is provided a computer program comprising computer program instructions for: detecting that content being rendered is linked to data; interrupting a first screen for display, while the content is being rendered, to display an additional screen that is dependent upon the linked data.

According to another embodiment of the invention there is provided a graphical user interface comprising: a first screen for display while content is being rendered; and an additional screen that is dependent upon data linked to content being rendered for interrupting the first screen.

According to another embodiment of the invention there is provided an apparatus comprising: an output device for rendering content; a display for presenting at least a first screen while content is being rendered; a processor arranged to detect that the content being rendered is linked to data and arranged to control the display to interrupt the first screen to display an additional screen that is dependent upon the linked data.

According to another embodiment of the invention there is provided a method comprising: rendering content using content data; obtaining first information from the content data; and using the first information to access data linked to the first information.

According to another embodiment of the invention there is provided an apparatus comprising: an output device for rendering content defined by content data; a processor arranged to obtain first information from the content data and, using the first information, to access data linked to the first information.

According to another embodiment of the invention there is provided a computer program comprising computer program instructions for: obtaining first information from the content data; and using the first information to access data linked to the first information.

### BRIEF DESCRIPTION OF THE DRAWINGS

For a better understanding of the present invention reference will now be made by way of example only to the accompanying drawings in which:
Fig 1 schematically illustrates an apparatus for rendering content;
Figs 2A and 2B schematically illustrate alternative methods for interrupting a rendering screen with a data screen;
Fig 3 schematically illustrates a graphical user interface (GUI) for a music player embodiment;
Figs 4A illustrates a graphical user interface for user creation of a link between a content item and a data structure;
Figs 4B illustrates a method for explicitly defining a link between a content item and a data structure;
Fig 5 schematically illustrates a database for storing links between content items and data structures.

### DETAILED DESCRIPTION OF EMBODIMENTS OF THE INVENTION

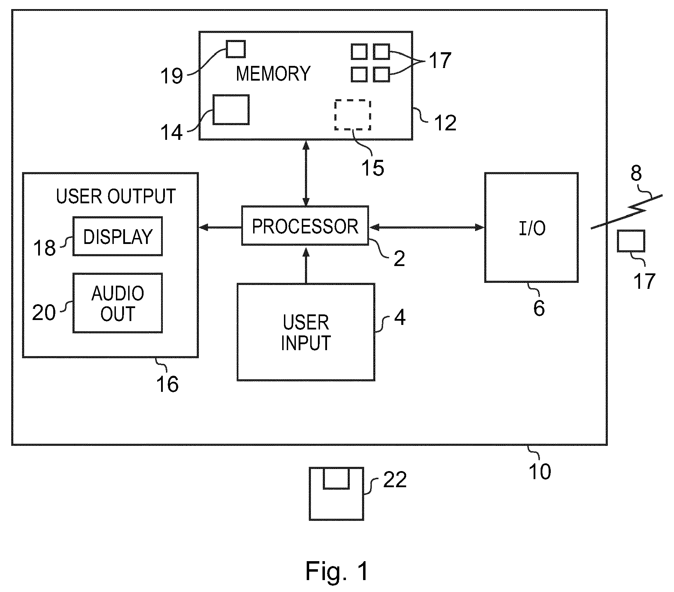

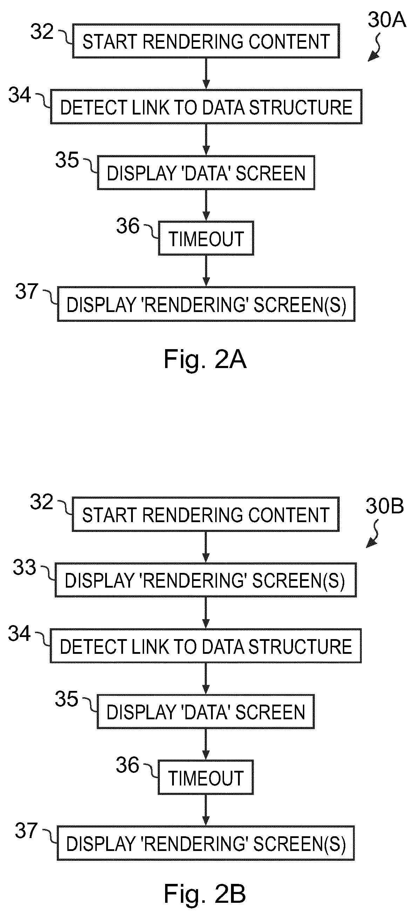

Fig. 1 schematically illustrates an apparatus 10 comprising: an output device 16 for rendering content 41; a display 18 for presenting at least a first rendering screen 42 while content 41 is being rendered; a processor 2 arranged to detect 34 (Figs 2A, 2B) that the content 41 being rendered is linked to data and arranged to control the display 18 to interrupt the first rendering screen 42 to display an additional screen 44 that is dependent upon the linked data 48.

The apparatus 10 may operate as, for example, a music player, a gaming device, a video player, a computer device such as a personal digital assistant or portable computer, a mobile cellular telephone, a home entertainment system or any other electronic device or system that is capable of rendering content.

The apparatus 10 comprises: processing circuitry 2; a user input interface 4; a user output interface 16; an input/output interface 6; and a memory 12.

The processing circuitry 2 is connected to read from and write to the memory 12, to provide commands to the user output interface 16, to receive commands from the user input interface 4 and to receive data from and, possibly, send data to the input/output interface 6.

The processing circuitry 2 may in one implementation be provided by one or more processors 2 such as microprocessors. In other implementations the processing circuitry 2 may be provided by dedicated circuitry such as, for example, application specific integrated circuits (ASICs) or field programmable gate arrays (FPGA).

The user input interface 4 enables a user to control the apparatus 10 by for example touch and/or audio. Touch control may be provided via a keypad, joystick, touch screen display or similar. Audio control may be provided via a combination of microphone and speech recognition software.

The input/output interface 6 enables the apparatus 10 to receive data 8, such as content items 17. The input/output interface may be, for example, a device for reading a record medium such as cd-rom, secure digital card or similar or a network adapter for connecting to a network e.g. the Internet or a private network or a cellular radio transceiver for communicating in a cellular telecommunications network.

The user output interface 16 enables information to be presented to a user. It includes a display 18 for rendering visual content and, in this example, an audio output device 20 for rendering audio content. The display 18 may be any suitable display such as, for example, a liquid crystal display or thin film transistor display. The audio output device 20 may, for example, include one or more loudspeakers and/or a jack for headphones.

The memory 12 may be a single memory device (monolithic structure) or comprise multiple memory devices. If the memory 12 comprises multiple memory devices, some or all of the memory devices may be local that is housed in the apparatus. If the memory 12 comprises multiple memory devices, one or more of the memory devices may be remote that is housed externally to the apparatus for example in an external memory device or a remote server.

The memory 12 stores a library of content items 17, data 19 including data structures 48 that are linked to content items, a computer program 14 and, possibly, a database 15 for recording the links between content items 17 and data structures 48.

A content item 17 is a data structure that may be processed by the processor 2 to produce content 41 rendered via the user output interface 16. The content item 17 may be used from storage in the memory 12 or used as streaming data received via the input/output interface 6 without being permanently stored in the memory 12.

For example, a content item may be a broadcast radio programme, an MP3 file, an image, a video, a message, a calendar note, a web-page etc.

Content 41 may comprise primary content 41C and secondary, metadata content 41 A, 41 B.

In the example of a MP3 music file, the content is multimedia. The primary content 41C is a music track 41C rendered via the audio output device 20. The secondary metadata content is information about the music track such as the artist name 41A and the music track title 41B that is rendered as text via the display 18. The MP3 format enables the inclusion of metadata such as artist name, title track and genre via I D3.

In the example of a broadcast radio programme, the content is multimedia. The primary content 41C is an audio track rendered via the audio output device 20. The secondary metadata content 41A, 41 B is information provided via the radio data system (RDS) radio text (RT) that is rendered as text via the display 18. This may include the name of the radio programme or the title of a music track that is being played.

The data 19 includes separate data structures 48. At least some of these data structures 48 are application data used by applications other than that used to render the content 41 and may not be capable of being rendered by that content rendering application. For example, some of the data structures 48 may comprise user data such as images and text whereas the rendering application may be a music player application. The user data may include data structures that are associated with specific persons such as personal contacts information (address book) which may have separate contact cards associated with different persons, personal messages (Inbox, Outbox) which includes messages received from or sent to specific persons, personal calendar items which include appointments with specific persons, and a personal communication log which includes a record of communications such as telephone calls made to and received from specific persons.

The user data structures may include addresses for communication. A contact card from an address book typically includes a number of addresses for communication such as telephone numbers, email addresses, street addresses. Messages typically include an address for communication such as a mobile telephone number for an SMS or MMS or an email address for an email. A communications log typically includes addresses for communication such as mobile telephone numbers.

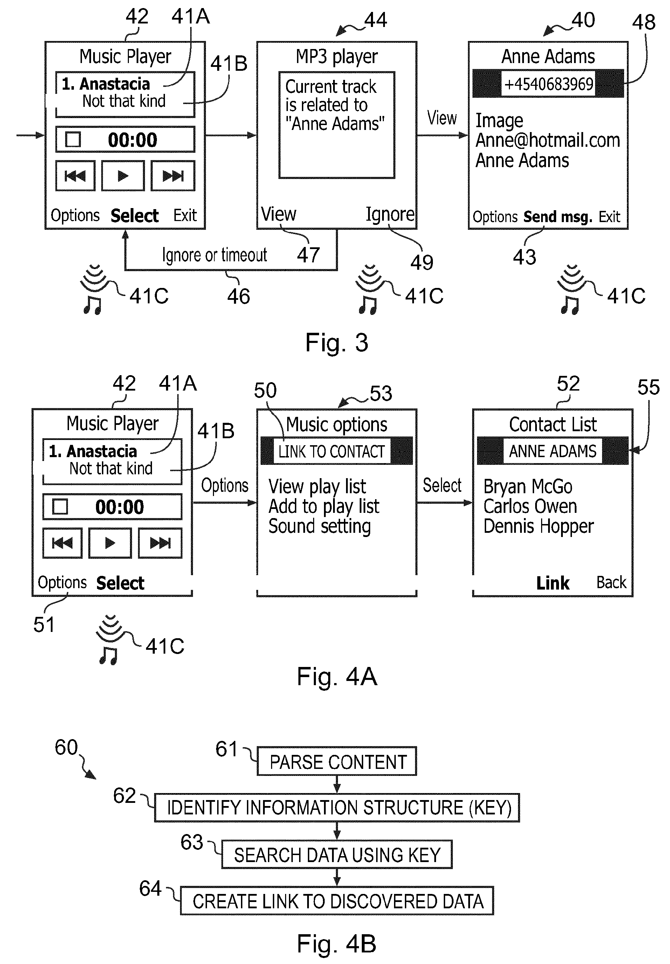

The computer program 14 comprises computer program instructions that control the operation of the apparatus 10 when loaded into the processor 2. The computer program instructions 14 provide the logic and routines that enables the electronic device to perform the methods illustrated in Figs 2A, 2B and 4B and the graphical user interfaces illustrated in Figs 3 and 4A.

The computer program instructions may arrive at the apparatus 10 via an electromagnetic carrier signal or be copied from a physical entity 22 such as a computer program product, a memory device or a record medium such as a CD-ROM or DVD.

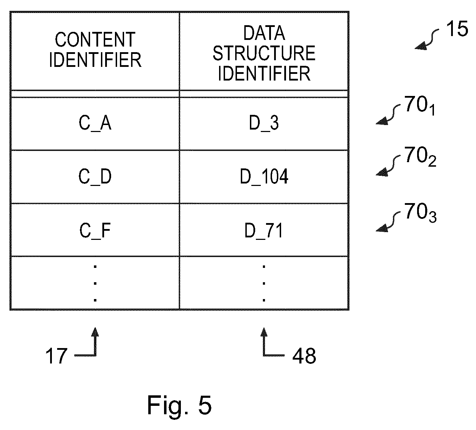

The database 15 (Fig 5) is used to store links 70 between content items 17 and data structures 48. A link 70 may be created by a user (Fig 4A) and then stored in the database 15. Alternatively, a link 70 may be created automatically after the linked data structure is discovered by searching the data 19 using a portion of the content 41 (Fig 4B).

Referring to Fig 4A, a user is able to create a link 70 as a predetermined user specified relationship between a content item and a user selected data structure.

A music application is being used to play a music track 41C via the audio output device 20 while simultaneously presenting the artist name 41A and track title 41 B within a rendering screen 42 on the display 18. The rendering screen 42 includes a user selectable button 51 labelled 'options'. When this is selected, an options menu screen 53 is displayed. The options menu includes an entry 50 labelled 'link to contact'. In other embodiments a more generic 'create link' option may be provided with a sub-menu of possible data structure types e.g. contact cards, messages, etc

If the user selects the entry 50 a list screen 52 provides a list of contact names from which the user is able to select a contact entry 55.

Selecting a contact entry creates a link 70 between the content item being played (the music track 'Not that kind' by Anastacia) and the contact card 48 for the selected contact name (Anne Adams). The link is stored in the database 15 as an association between an identifier of the content item 17 (the music track 'Not that kind' by Anastacia) such as the MP3 file name or memory address and an identifier of the linked data structure (contact card for Anne Adams) such as an identification of the application 'contacts'.

Fig 4B schematically illustrates a method 60 for automatically or semi-automatically defining a link between a content item 17 and a data structure 48. The method 60 includes a series of blocks which may represent steps in a method and/or sections of code in the computer program 14.

At block 61 the content item 17 is parsed. Typically, the textual metadata 41A, 41 B is parsed. Parsing divides the metadata into separate information structures.

At block 62 a particular information structure is identified as a search key. The identification may occur automatically e.g. the same information structure is always used or a user may be invited to make a selection.

At block 64, the data 19 is searched using the search key and one or more data structures are discovered.

At block 64, the content item 17 is explicitly linked 70 to one or ore of the discovered data structures. The selection of the discovered data structures to which a link is defined may be automatic or may involve user selection.

It should be appreciated that a link may be implicit (undiscovered) or explicit (explicitly defined). For example, there is an implicit link between a content item that includes as metadata a search key shared with a data structure even if that fact is unknown. Once the relationship is known, the link becomes explicit. The database 15 stores explicit links 70.

Once an explicit link 70 is discovered it may be used and/or stored in database 15.

For example, the method 60 may be performed contemporaneously with rendering and the resultant link to a data structure 48 may be immediately used to temporarily interrupt the rendering screen 42 with a data screen 44 dependent upon the linked data structure 48. The interruption will occur after the rendering screen 42 has been displayed for a period of time because the contemporaneous processing takes time (Fig 2B).

For example, the method 60 may be performed prior to rendering content such as when the content item is initially stored in the memory 12. The resultant link 70 to a data structure 48 may be stored in database 15 and subsequently used to temporarily interrupt the rendering screen 42 with a data screen 44 dependent upon the linked data structure. The interrupt will occur immediately perhaps without the rendering screen 42 having been displayed (Fig 2A) or only very briefly displayed (Fig 2B).

Figs 2A and 2B schematically illustrate a method 30A, 30B comprising: rendering content while displaying at least a first screen (block 33, 37); detecting that the rendered content is linked to data (block 34); interrupting the first screen to display an additional screen that is dependent upon the linked data (block 35).

The method 30 includes a series of blocks which may represent steps in a method and/or sections of code in the computer program 14. Reference will be made without loss of generality to Fig 3 in which the content item is a music track.

Fig 3 schematically illustrates a graphical user interface 40 comprising: a first rendering screen 42 for display while content 41 is being rendered; and an additional screen 44 that is dependent upon a data structure 48 linked to content 41 being rendered that is for interrupting the first screen 42.

At block 32, there is an initiation of rendering a content item 17 comprising content components 41.

At block 33 (not present in Fig 2A), the primary content 41C is rendered and a rendering screen 42 is displayed. The rendering screen 42 includes rendered metadata content 41A, 41B. In the music track example, the rendered metadata includes text 41A identifying the artist of the music track being rendered via the audio output device 20 and includes text 41 B identifying the title of the music track being rendered via the audio output device 20

At block 34, a link between the rendered content item 17 and a data structure 48 is detected. An implicit link may be contemporaneously detected as an explicit link or alternatively an explicit link may be detected in the database 15.

At block 35, the rendering screen 42 is interrupted by the display of an additional data screen 44. In this example, the additional data screen replaces the rendering screen. However different forms of interruption may be used. For example, the additional data screen 44 may only partly overlie the rendering screen, for example it may be a pop-up screen, or the rendering screen may be re-sized and/or repositioned to enable the rendering screen 42 and the additional data screen to be simultaneously displayed without overlap. The additional screen 44 may have a solid background so that it obscures the rendering screen if it overlies the rendering screen or could have a transparent background such that it appears to overwrite the rendering screen if it overlies the rendering screen.

The additional data screen 44 in the example of Fig 3 does not, in this example, comprise the linked data structure 48 but provides a user selectable path 47 to the linked data structure. If the user selects this path the linked data structure 48 is displayed and a user selectable option 43 may be provided to use the data structure 48. In the example of Fig 3, the user selectable option 43 is to communicate (send a message) using a telephone number included in the linked data structure (a contact card) 48.

If multiple data structures where linked to the rendered content item 17 then a menu of multiple separately selectable paths, each of which leads to a linked data structure, could be displayed.

In other implementations, the additional data screen 44 may comprise the linked data structure 48.

The data screen 44 is, in this implementation, only displayed for a predetermined timeout period which is tested at block 36. If the user does not select the path 47 to the linked data structure 48 or select an option 49 to return to the rendering screen 42 then, after the timeout period, the data screen is no longer displayed and the original rendering screen 42 is displayed at block 37.

It will therefore be appreciated that the rendering screen 42 is only temporarily interrupted.

An number of example uses cases will now be given which should not be considered to limit the generality of the invention:
Music may be linked with a data structure such as a contact card. The music is rendered while displaying at least a first screen. This screen is interrupted, while the music is rendered, to display an additional contact screen that is dependent upon the linked contact card.

Music may be linked with a data structure such as a contact card. An option to play the linked music may be presented in a an interrupt screen while the contact card is displayed.

Music may be linked with a data structure such as a call log because it is the same music used as a ring tone. The music is rendered while displaying at least a first screen. This screen is interrupted, while the music is rendered, to display an additional call log screen that is dependent upon the linked call log.

Music may be linked with a data structure such as a calendar note. The link may be made manually or alternatively automatically because the alarm tone for that calendar reminder is the same as a music track being played. The music is rendered while displaying at least a first screen. This screen is interrupted, while the music is rendered, to display an additional calendar note screen that is dependent upon the linked calendar log.

Music may be linked with a data structure such as an image. The music is rendered while displaying at least a first screen and this first screen is interrupted, while the music is rendered, to display an additional screen that is dependent upon the linked image. For example a thumbnail image may be displayed.

Music may be linked with a data structure such as an image. The image is rendered in a first screen and this first screen is interrupted to display an additional screen that is dependent upon the linked music. For example, an option to play the linked music may be presented or the music may be played automatically and an option to stop or control the playing of the music may be presented.

An internet bookmark/web-page may be linked with a data structure such as a music track. The web-page is rendered while displaying at least a first browser screen and this first screen is interrupted to display an additional screen that is dependent upon the linked music. For example, an option to play the linked music may be presented or the music may be played automatically and an option to stop or control the playing of the music may be presented.

Music may be linked with a data structure such as an internet bookmark/web-page. The music is rendered while displaying at least a first screen and this first screen is interrupted to display an additional screen that is dependent upon the linked bookmark/web-page. For example, an option to view the web-page may be presented.

Although embodiments of the present invention have been described in the preceding paragraphs with reference to various examples, it should be appreciated that modifications to the examples given can be made without departing from the scope of the invention as claimed.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

According to some, but not necessarily all, embodiments of the invention there is provided a method comprising rendering content while displaying at least a first screen; detecting that the rendered content is linked to data; and interrupting the first screen to display an additional screen that is dependent upon the linked data.

Interruption of the first screen may be temporary.

The additional screen may enable access to the linked data.

The additional screen may enable performance of a function using the linked data.

The function may be telecommunication.

The linked data may be user data.

The linked data may be a data structure associated with a person.

The linked data may comprise data for communication.

The link between the rendered content and the linked data may be a predetermined relationship.

The predetermined relationship may be a user specified relationship.

The link between the content and the data may be a relationship determined contemporaneously with the rendering of the content.

The link may be determined automatically.

The method may further comprise parsing content to extract an information structure; searching data to identify data structures that include the information structure; and defining a link between a data structure that contains the information structure and the content from which the information structure is extracted.

The content may include primary content and metadata for primary content.

The metadata may comprise text.

The first screen may include rendered content.

According to some, but not necessarily all, embodiments of the invention there is provided an apparatus comprising an output device for rendering content; a display for presenting at least a first screen while content is being rendered; and a processor arranged to detect that the content being rendered is linked to data and arranged to control the display to interrupt the first screen to display an additional screen that is dependent upon the linked data.

Interruption of the first screen may be temporary.

The additional screen may enable access to the linked data.

The additional screen may enable performance of a function using the linked data.

The function may be telecommunication.

The linked data may be user data.

The linked data may be a data structure associated with a person.

The linked data may comprise data for communication.

The link between content and data may be a user specified relationship.

The processor may be arranged to determine a link relationship between content and data while enabling rendering the content.

According to some, but not necessarily all, embodiments of the invention there is provided a computer program comprising computer program instructions for detecting that content being rendered is linked to data; and interrupting a first screen for display while the content is being rendered to display an additional screen that is dependent upon the linked data.

According to some, but not necessarily all, embodiments of the invention there is provided a computer program comprising program instructions for causing a computer to perform a method as described in the previous paragraphs.

A physical entity may embody the computer program as described in the previous paragraphs.

According to some, but not necessarily all, embodiments of the invention there is provided a graphical user interface comprising a first screen for display while content is being rendered; and an additional screen that is dependent upon data linked to content being rendered for interrupting the first screen.

According to some, but not necessarily all, embodiments of the invention there is provided a method comprising rendering content using content data; obtaining first information from the content data; and using the first information to access data linked to the first information

According to some, but not necessarily all, embodiments of the invention there is provided an apparatus comprising an output device for rendering content defined by content data; a processor arranged to obtain first information from the content data; and using the first information, to access data linked to the first information.

According to some, but not necessarily all embodiments of the invention, there is provided a computer program comprising computer program instructions for obtaining first information from the content data; and using the first information to access data linked to the first information.

## Claims

1. A method comprising:
rendering multimedia by an apparatus via a user output interface, the multimedia comprising metadata;
in response to rendering the multimedia, searching by a processor of the apparatus at least one data structure using a search key obtained by parsing the metadata to discover one or more data structures comprising contacts information; and
in response to discovering one or more data structures comprising contacts information using the search key, displaying a screen that provides at least one user selectable path to enable a user to access the discovered one or more data structures comprising contacts information.

2. A method as claimed in any preceding claim, wherein the rendered multimedia is produced from streamed data received by the apparatus.

3. A method as claimed in any preceding claim, wherein the at least one user selectable path provided by the additional screen enables performance of a function using the contact card.

4. A method as claimed in claim 3, wherein the function is telecommunication.

5. A method as claimed in claim 3 or 4, wherein the function is the sending of a message.

6. A method as claimed in any preceding claim, wherein the at least one data structure comprising contacts information comprises data for communication.

7. A method as claimed in any preceding claim, wherein the searched at least one data structure comprises a database of predetermined relationships.

8. A method as claimed in claim 7, wherein the predetermined relationship is a user specified relationship.

9. A method as claimed in any preceding claim, further comprising discovering the one or more data structures comprising contacts information rendering the multimedia.

10. An apparatus comprising means adapted for performing the method of one or more of claims 1 to 9.

11. An apparatus as claimed in claim 10, wherein the apparatus is a mobile telephone.

12. A computer program comprising program instructions for enabling a computer to perform the method of one or more of claims 1 to 9.

## Patentansprüche

1. Verfahren, das Folgendes umfasst:
Rendern von Multimedia-Elementen durch eine Vorrichtung über eine Benutzerausgabeschnittstelle, wobei die Multimedia-Elemente Metadaten umfassen;
in Ansprechen auf das Rendern der Multimedia-Elemente Durchsuchen mindestens einer Datenstruktur durch einen Prozessor der Vorrichtung unter Verwendung eines Suchschlüssels, der durch Parsen der Metadaten erhalten wird, um eine oder mehrere Datenstrukturen, die Kontaktinformationen umfassen, zu entdecken; und
in Ansprechen auf das Entdecken einer oder mehrerer Datenstrukturen, die Kontaktinformationen umfassen, unter Verwendung des Suchschlüssels Anzeigen eines Bildschirms, der mindestens einen von einem Benutzer auswählbaren Pfad bereitstellt, um einem Benutzer den Zugriff auf die entdeckte eine Datenstruktur oder die entdeckten mehreren Datenstrukturen, die Kontaktinformationen umfasst/umfassen, zu ermöglichen.

2. Verfahren nach einem vorhergehenden Anspruch, wobei die gerenderten Multimedia-Elemente aus gestreamten Daten, die durch die Vorrichtung empfangen werden, produziert werden.

3. Verfahren nach einem vorhergehenden Anspruch, wobei der mindestens eine von einem Benutzer auswählbare Pfad, der durch den zusätzlichen Bildschirm bereitgestellt wird, die Durchführung einer Funktion unter Verwendung der Kontaktkarte ermöglicht.

4. Verfahren nach Anspruch 3, wobei die Funktion eine Telekommunikation ist.

5. Verfahren nach Anspruch 3 oder 4, wobei die Funktion das Senden einer Nachricht ist.

6. Verfahren nach einem vorhergehenden Anspruch, wobei die mindestens eine Datenstruktur, die Kontaktinformationen umfasst, Daten zur Kommunikation umfasst.

7. Verfahren nach einem vorhergehenden Anspruch, wobei die mindestens eine durchsuchte Datenstruktur eine Datenbank mit vorher festgelegten Beziehungen umfasst.

8. Verfahren nach Anspruch 7, wobei die vorher festgelegte Beziehung eine von einem Benutzer vorgegebene Beziehung ist.

9. Verfahren nach einem vorhergehenden Anspruch, das ferner Entdecken der einen Datenstruktur oder der mehreren Datenstrukturen, die Kontaktinformationen umfasst/umfassen, um die Multimedia-Elemente zu rendern, umfasst.

10. Vorrichtung, die Mittel umfasst, die zum Durchführen des Verfahrens nach einem oder mehreren der Ansprüche 1 bis 9 angepasst sind.

11. Vorrichtung nach Anspruch 10, wobei die Vorrichtung ein Mobiltelefon ist.

12. Computerprogramm, das Programmanweisungen umfasst, um einem Computer das Durchführen des Verfahrens nach einem oder mehreren der Ansprüche 1 bis 9 zu ermöglichen.

## Revendications

1. Procédé comprenant les étapes suivantes :
rendre un contenu multimédia par un appareil par l'intermédiaire d'une interface de sortie utilisateur, le contenu multimédia comportant des métadonnées ;
en réponse au rendu du contenu multimédia, rechercher par un processeur de l'appareil au moins une structure de données en utilisant une clé de recherche obtenue en analysant les métadonnées pour découvrir une ou plusieurs structures de données contenant des informations de contacts ; et
en réponse à la découverte d'une ou plusieurs structures de données comprenant des informations de contacts en utilisant la clé de recherche, afficher un écran qui fournit au moins un chemin sélectionnable par l'utilisateur permettant à un utilisateur d'accéder aux une ou plusieurs structures de données découvertes comportant des informations de contacts.

2. Procédé selon l'une quelconque des revendications précédentes, dans lequel le contenu multimédia rendu est produit à partir de données diffusées en continu reçues par l'appareil.

3. Procédé selon l'une quelconque des revendications précédentes, dans lequel ledit chemin sélectionnable par l'utilisateur fourni par l'écran additionnel offre les performances d'une fonction qui utilise la carte de contact.

4. Procédé selon la revendication 3, dans lequel la fonction est une fonction de télécommunication.

5. Procédé selon la revendication 3 ou 4, dans lequel la fonction est l'envoi d'un message.

6. Procédé selon l'une quelconque des revendications précédentes, dans lequel ladite structure de données comprend des informations de contacts comportant des données pour une communication.

7. Procédé selon l'une quelconque des revendications précédentes, dans lequel ladite structure de données recherchée comprend une base de données de relations prédéterminées.

8. Procédé selon la revendication 7, dans lequel la relation prédéterminée est une relation spécifiée par l'utilisateur.

9. Procédé selon l'une quelconque des revendications précédentes, comprenant en outre : découvrir les une ou plusieurs structures de données comportant des informations de contacts rendant le contenu multimédia.

10. Appareil comprenant des moyens conçus pour exécuter le procédé de l'une ou plusieurs des revendications 1 à 9.

11. Appareil selon la revendication 10, dans lequel l'appareil est un téléphone mobile.

12. Programme d'ordinateur comprenant des instructions de programme permettant à un ordinateur d'exécuter le procédé de l'une ou plusieurs des revendications 1 à 9.
